# EUROPEAN PATENT APPLICATION

(11) **EP 4 727 138 A1**
(43) Date of publication of application: **15.04.2026**
(21) Application number: 24858002.9
(22) Date of filing: 27.06.2024
(51) Int. Cl.: H04N 21/234

(54) **VIDEO PROCESSING METHOD AND ELECTRONIC DEVICE**

(30) Priority: 25.08.2023 CN 202311086459
(71) Applicant: Huawei Technologies Co., Ltd., Shenzhen, Guangdong 518129 (CN)
(72) Inventor: YANG, Zhiyong, Shenzhen, Guangdong 518129 (CN); QIAO, Xin, Shenzhen, Guangdong 518129 (CN); XIONG, Jinyou, Shenzhen, Guangdong 518129 (CN); SUN, Lue, Shenzhen, Guangdong 518129 (CN)
(74) Representative: Gill Jennings & Every LLP
(86) International application number: PCT/CN2024/101982
(87) International publication number: WO 2025/044458

(57) **Abstract**

Embodiments of this application provide a video processing method and an electronic device, relating to the field of electronic technologies. The method may be applied to the electronic device. The method includes: The electronic device may send a video obtaining request for a target video to a server, and receive, from the server, information used to adjust video quality of the target video and video stream information of the target video. The electronic device may further obtain video data corresponding to the video stream information based on the video stream information of the target video, perform image processing on the video data corresponding to the video stream information based on the information used to adjust the video quality of the target video, and display processed video data. In embodiments of this application, image processing can be performed on the video data for display with consideration of the video quality of the target video, to prevent excessive adjustment to the video data. This improves display effect of the video data and user experience.

## Description

This application claims priority to Chinese Patent Application No. 202311086459.3, filed with the China National Intellectual Property Administration on August 25, 2023 and entitled "VIDEO PROCESSING METHOD AND ELECTRONIC DEVICE", which is incorporated herein by reference in its entirety.

### TECHNICAL FIELD

This application relates to the field of electronic technologies, and in particular, to a video processing method and an electronic device.

### BACKGROUND

Rapid proliferation of electronic devices such as televisions, mobile phones, and computers brings many conveniences and enjoyments to people's lives. People may use electronic devices to watch some video resources for entertainment or learning. In a process of playing a video resource, an electronic device usually obtains video data corresponding to a video from a cloud server, preprocesses the video data to improve display effect of the video resource, and finally controls a display to display a video image.

Currently, to balance display effect of most video resources, in a process of preprocessing video data, an electronic device usually adjusts the video data in a same manner, for example, increases definition corresponding to the video data by 20%. It may be understood that video data corresponding to each video resource is different, some video data corresponds to high definition, and some video data corresponds to low definition. Uniform adjustment to most video resources leads to excessive adjustment to the video resources. Consequently, when the electronic device plays the video resources, the video resources have poor display effect, compromising user experience.

### SUMMARY

Embodiments of this application provide a video processing method and an electronic device. The electronic device may receive information used to adjust video quality of a target video and sent by a server, perform image processing on video data based on information about the video quality of the target video, and display processed video data. Image processing is performed on the video data for display with consideration of the video quality of the target video, to prevent excessive adjustment to the video data. This improves display effect of the video data.

To achieve the foregoing objective, the following technical solutions are used in embodiments of this application.

According to a first aspect, an embodiment of this application provides a video processing method. The method may be applied to an electronic device. The method includes: The electronic device may send a video obtaining request for a target video to a server, and receive information used to adjust video quality of the target video and video stream information of the target video from the server. The electronic device may further obtain video data corresponding to the video stream information based on the video stream information of the target video, perform image processing on the video data corresponding to the video stream information based on the information used to adjust the video quality of the target video, and display processed video data.

In other words, the electronic device may receive the information used to adjust the video quality of the target video and sent by the server, perform image processing on the video data based on information about the video quality of the target video, and display the processed video data. In this way, the electronic device can perform image processing on the video data for display with consideration of the video quality of the target video, to prevent excessive adjustment to the video data. This improves display effect of the video data and user experience.

In an implementation of the first aspect, in a process of performing image processing on the video data corresponding to the video stream information based on the information used to adjust the video quality of the target video and displaying the processed video data, the electronic device may determine target quality parameter information based on the information used to adjust the video quality of the target video. The target quality parameter information matches a display capability of the electronic device. At least one parameter in the target quality parameter information is different from a parameter in the information used to adjust the video quality of the target video. The electronic device may further perform image processing on the video data corresponding to the video stream information based on the target quality parameter information, and display processed video data.

In other words, the electronic device may determine the target quality parameter information based on the information used to adjust the video quality of the target video. The target quality parameter information matches the display capability of the electronic device.

In this way, the electronic device can perform image processing on the video data for display by using the target quality parameter information with consideration of the video quality of the target video and the display capability of the electronic device. This avoids wasting the display capability of the electronic device and prevents excessive image processing on the video data. Because video data obtained after the image processing matches the display capability of the electronic device, the electronic device can improve display effect corresponding to the target video in a process of displaying the video data, to improve user experience.

In addition, a part or all of the parameters in the target quality parameter information may be different from parameters in the information used to adjust the video quality of the target video. In this case, the electronic device may perform image processing on the video data based on a part or all of the parameters in the information about the video quality of the target video, and display processed video data. This improves processing flexibility during image processing.

In an implementation of the first aspect, the information used to adjust the video quality of the target video includes target quality parameter information. The target quality parameter information matches a display capability of the electronic device.

In a process of performing image processing on the video data corresponding to the video stream information based on the information used to adjust the video quality of the target video and displaying the processed video data, the electronic device may perform image processing on the video data corresponding to the video stream information based on the target quality parameter information, and display processed video data.

In other words, the electronic device may receive the information used to adjust the video quality of the target video and sent by the server. The information includes the target quality parameter information. The target quality parameter information matches the display capability of the electronic device. In this way, the electronic device can directly perform image processing on the video data based on the target quality parameter information sent by the server, and display processed video data. This avoids wasting the display capability of the electronic device and prevents the electronic device from performing excessive image processing on the video data. Because video data obtained after the image processing matches the display capability of the electronic device, the electronic device can improve display effect corresponding to the target video in a process of displaying the video data, to improve user experience.

In an implementation of the first aspect, information about the video quality of the target video includes original quality parameter information. In a process of performing image processing on the video data corresponding to the video stream information based on the target quality parameter information and displaying the processed video data, the electronic device may adjust an original quality parameter of the video data corresponding to the video stream to be consistent with the target quality parameter information based on the target quality parameter information, and display processed video data.

In other words, in some examples, the target quality parameter information may be one or more specific parameters, for example, a definition parameter of 50, a color parameter of 30, and a contrast parameter of 30. The electronic device may adjust the original quality parameter of the video data corresponding to the video stream to be consistent with the specific parameter based on the specific parameter, and display the processed video data. This avoids wasting the display capability of the electronic device and prevents excessive image processing on the video data.

In an implementation of the first aspect, the target quality parameter information includes an adjustment value corresponding to at least one parameter in the information used to adjust the video quality of the target video. In a process of performing image processing on the video data corresponding to the video stream information based on the target quality parameter information and displaying the processed video data, the electronic device may perform image processing on the video data corresponding to the video stream information based on the adjustment value corresponding to the at least one parameter, and display processed video data.

In other words, in some examples, the target quality parameter information may be adjustment values corresponding to one or more parameters, that is, may represent a degree to which the one or more parameters need to be adjusted. In this case, the electronic device may alternatively perform image processing on the video data based on the adjustment values corresponding to the one or more parameters, and display processed video data. Similarly, this avoids wasting the display capability of the electronic device and prevents excessive image processing on the video data.

In an implementation of the first aspect, the information used to adjust the video quality of the target video includes information used to adjust image quality of at least one frame of image in the target video.

In a process of performing image processing on the video data corresponding to the video stream information based on the information used to adjust the video quality of the target video and displaying the processed video data, the electronic device may perform image processing on the at least one frame of image in the video data corresponding to the video stream information based on the information used to adjust the image quality of the at least one frame of image in the target video, and display processed video data.

In other words, the electronic device may receive the information used to adjust the image quality of the at least one frame of image in the target video and sent by the server, and perform image processing on the at least one frame of image in the video data based on information about the image quality of the at least one frame of image in the target video, and display the processed video data. In this way, the electronic device can perform image processing on the at least one frame of image in the video data for display with consideration of the image quality corresponding to the at least one frame of image. The at least one frame of image in the video data can be processed finely, to improve flexibility and fineness during processing.

In an implementation of the first aspect, the method further includes: outputting prompt information. The prompt information is used to prompt that the video quality of the target video has been improved.

It can be learned that after performing image processing on the video data, the electronic device may output the prompt information to prompt a user that the video quality of the target video has been improved. This improves interactivity between the user and the electronic device and flexibility of a video display process.

In an implementation of the first aspect, the information used to adjust the video quality of the target video includes one or more of a definition parameter, a color parameter, a contrast parameter, a brightness parameter, a noise parameter, a smoothness parameter, a grayscale parameter, a saturation parameter, a background blur degree parameter, a vignetting parameter, or a color temperature parameter.

In an implementation of the first aspect, the video obtaining request includes a video identifier of the target video; or the video stream information of the target video includes a video stream address of the target video.

In an implementation of the first aspect, the display capability of the electronic device includes at least one of a display hardware capability and a display software capability of the electronic device.

According to a second aspect, an embodiment of this application further provides a video processing method, applied to a server. The method includes: The server may receive a video obtaining request that is for a target video and that is sent by an electronic device, and obtain information used to adjust video quality of the target video and video stream information of the target video based on the video obtaining request. The server may further send the information used to adjust the video quality of the target video and the video stream information of the target video to the electronic device. Information about the video quality of the target video is used to adjust the video quality of the target video displayed on a device.

In other words, the server may obtain the information used to adjust the video quality of the target video. The information about the video quality of the target video is used to adjust the video quality of the target video displayed on the device. In addition, the server may send the information about the video quality of the target video to the electronic device, so that the electronic device can subsequently perform image processing on video data for display with consideration of the video quality of the target video, to prevent excessive adjustment to the video data. This improves display effect of the video data.

In an implementation of the second aspect, before receiving the video obtaining request that is for the target video and that is sent by the electronic device, the server may perform image quality detection on video data corresponding to the target video, to obtain the information used to adjust the video quality of the target video.

In other words, the server may perform image quality detection on the video data corresponding to the target video in advance, to obtain the information used to adjust the video quality of the target video. In this way, the information used to adjust the video quality of the target video may be subsequently sent to the electronic device, so that the electronic device can subsequently perform image processing on the video data for display based on the video quality of the target video, to prevent excessive adjustment to the video data.

In an implementation of the second aspect, before receiving the video obtaining request that is for the target video and that is sent by the electronic device, the server may alternatively perform image quality detection on video data corresponding to the target video, to obtain the information used to adjust the video quality of the target video, and determine target quality parameter information based on the information used to adjust the video quality of the target video. The target quality parameter information matches a display capability of the electronic device. The server may further send the target quality parameter information and the video stream information of the target video to the electronic device.

In other words, the server may determine the target quality parameter information based on the information used to adjust the video quality of the target video. The target quality parameter information matches the display capability of the electronic device. In addition, the target quality parameter information and the video stream information of the target video are sent to the electronic device, so that the electronic device can subsequently perform image processing on the video data for display by using the target quality parameter information with consideration of the video quality of the target video and the display capability of the electronic device. This avoids wasting the display capability of the electronic device and prevents excessive image processing on the video data. Because video data obtained after the image processing matches the display capability of the electronic device, display effect corresponding to the target video can be further improved.

In an implementation of the second aspect, the video obtaining request includes a video identifier of the target video; or the video stream information of the target video includes a video stream address of the target video. In a process of obtaining the information used to adjust the video quality of the target video and the video stream information of the target video based on the video obtaining request, the server may obtain the information used to adjust the video quality of the target video and the video stream address of the target video based on the video identifier of the target video.

According to a third aspect, an embodiment of this application provides an interaction system. The interaction system includes an electronic device and a server.

The electronic device is configured to send a video obtaining request for a target video to the server.

The server is configured to receive the video obtaining request sent by the electronic device, and obtain information used to adjust video quality of the target video and video stream information of the target video.

The server is further configured to send the information used to adjust the video quality of the target video and the video stream information of the target video to the electronic device.

The electronic device is further configured to receive the information used to adjust the video quality of the target video and the video stream information of the target video that are sent by the server, and obtain video data corresponding to the video stream information based on the video stream information of the target video.

The electronic device is further configured to perform image processing on the video data corresponding to the video stream information based on the information used to adjust the video quality of the target video, and display processed video data.

It can be learned that the electronic device may receive the information used to adjust the video quality of the target video and the video stream information of the target video that are sent by the server, perform image processing on the video data based on information about the video quality of the target video, and display the processed video data. In this way, the electronic device can perform image processing on the video data for display with consideration of the video quality of the target video, to prevent excessive adjustment to the video data. This improves display effect of the video data and user experience.

According to a fourth aspect, an embodiment of this application provides a server. The server includes a memory and a processor. The memory stores program instructions. The processor runs the program instructions to perform the video processing method according to the second aspect.

According to a fifth aspect, an embodiment of this application provides an electronic device. The electronic device includes a memory, a processor, and a display. The memory, the display, and the processor are coupled. The display is configured to display a video image corresponding to a target video. The memory is configured to store computer-readable instructions. When the processor reads the computer-readable instructions from the memory, the electronic device is enabled to perform the video processing method according to the first aspect.

According to a sixth aspect, an embodiment of this application provides a computer-readable storage medium. The computer-readable storage medium includes a computer program. When the computer program is run on an electronic device, the electronic device is enabled to perform the video processing method according to the first aspect.

### BRIEF DESCRIPTION OF DRAWINGS

FIG. 1 is a schematic flowchart of a related technology 1 according to an embodiment of this application;
FIG. 2 is a schematic flowchart of a related technology 2 according to an embodiment of this application;
FIG. 3(A) and FIG. 3(B) are a diagram of a hardware structure of a smart display according to an embodiment of this application;
FIG. 4 is a diagram of a software structure of a smart display according to an embodiment of this application;
FIG. 5 is a diagram of a structure of an interaction system according to an embodiment of this application;
FIG. 6 is a schematic flowchart of a video processing method according to an embodiment of this application;
FIG. 7 is a schematic flowchart of an application scenario according to an embodiment of this application;
FIG. 8(A) and FIG. 8(B) are a schematic flowchart 1 between a smart display and a server according to an embodiment of this application;
FIG. 9 is a schematic flowchart 2 between a smart display and a server according to an embodiment of this application;
FIG. 10 is a schematic flowchart 3 between a smart display and a server according to an embodiment of this application;
FIG. 11 is a diagram of an interface of prompt information according to an embodiment of this application; and
FIG. 12 is a diagram of a structure of an electronic device according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" merely describes an association relationship between associated objects and represents that three relationships may exist. For example, A and/or B may represent the following three cases: Only A exists, both A and B exist, and only B exists, where A or B may be singular or plural. In addition, in descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes.

A person skilled in the art may understand that the terms such as "first" and "second" do not limit a quantity or an execution sequence, and the terms such as "first" and "second" do not indicate a definite difference. In addition, in some embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to similar technical problems.

In a process of playing a video resource, an electronic device usually obtains video data corresponding to a video from a cloud server, preprocesses the video data to improve display effect of the video resource, and finally controls a display to display a video image.

Currently, to balance display effect of most video resources, in a process of preprocessing video data, each electronic device usually adjusts the video data in a same manner.

For example, definition corresponding to the video resources is increased by 20%. It may be understood that video data corresponding to each video resource is different, some video data corresponds to high definition, and some video data corresponds to low definition. Uniform adjustment to most video resources leads to excessive adjustment to the video resources or failure to adjust the video resources to match a display hardware capability of the electronic device. Consequently, when the electronic device plays the video resources, the video resources have poor display effect, compromising user experience.

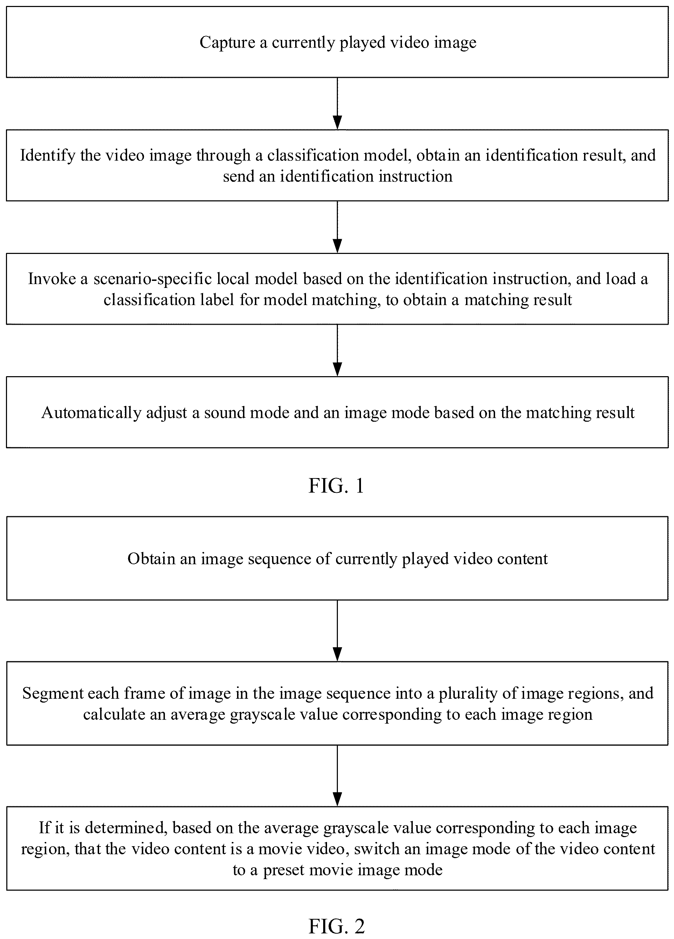

A related technology provides a method for adjusting an image mode. With reference to FIG. 1, an electronic device may capture a currently played video image, identify the video image through a classification model, obtain an identification result, and send an identification instruction. Next, the electronic device invokes a scenario-specific local model based on the identification instruction, and loads a classification label for model matching, to obtain a matching result. Then, a sound mode and an image mode are automatically adjusted based on the matching result.

It can be learned that in the foregoing solution, the video image is identified in real time based on a deep learning network classification model, to determine a video type. Different image modes are adjusted for different types of videos. When the electronic device determines a type of a video based on a frame of image in the video, for example, for sports videos and animation videos, a type determining error may occur and a false positive rate is high. In addition, different types of videos correspond to different sound modes and image modes. However, for videos of a same type, constant image parameters are still used for uniform adjustment. There is still a problem that an adjustment degree is excessively high or low in a video adjustment process. Consequently, when the electronic device plays a video resource, the video resource has poor display effect.

A related technology further provides a method for automatically matching an image mode. With reference to FIG. 2, in the solution, an electronic device obtains an image sequence of currently played video content, segments each frame of image in the image sequence into a plurality of image regions, and calculates an average grayscale value corresponding to each image region. If determining, based on the average grayscale value corresponding to each image region, that the video content is a movie video, the electronic device switches an image mode of the video content to a preset movie image mode.

It can be learned that in the foregoing solution, image adjustment is made only for movie videos, and the movie image mode corresponds to image parameters. In addition, constant image parameters are also applied to all movie videos for uniform adjustment. There is still a problem that an adjustment degree is excessively high or low in a video adjustment process. Consequently, when the electronic device plays a video resource, the video resource has poor display effect. In addition, currently, some movie videos do not have upper and lower black borders. If the video content is determined as a movie video based on a feature that the video has upper and lower black borders, a determining error may occur and a false positive rate is high.

It can be learned from the foregoing content that the currently provided video processing methods have a problem that a video resource is excessively adjusted or a video resource is not adjusted to proper display effect. Consequently, when the electronic device plays the video resource, the video resource has poor display effect.

Embodiments of this application provide a video processing method and an electronic device. The method may be applied to the electronic device. The method includes: The electronic device may send a video obtaining request for a target video to a server, and receive information used to adjust video quality of the target video and video stream information of the target video from the server. The electronic device may further obtain video data corresponding to the video stream information based on the video stream information of the target video, perform image processing on the video data corresponding to the video stream information based on the information used to adjust the video quality of the target video, and display processed video data.

In other words, in embodiments of this application, before playing the target video, the electronic device may receive the information used to adjust the video quality of the target video and the video stream information that are sent by the server, and may further perform image processing on the video data corresponding to a video stream based on the information used to adjust the video quality of the target video, and display video data obtained after the image processing.

It may be understood that the electronic device may pre-obtain the information used to adjust the video quality of the target video and sent by the server, and perform image processing on the video data for display with consideration of the video quality of the target video. This prevents excessive processing on the video data. Further, the electronic device can improve display effect corresponding to the target video in a process of displaying the video data, to improve user experience.

The video processing method provided in embodiments of this application may be applied to the electronic device. In some embodiments, the electronic device may include, for example, a smart display, a mobile phone, a tablet computer, a personal computer (personal computer, PC), a personal digital assistant (personal digital assistant, PDA), a smartwatch, a netbook, a wearable device, an augmented reality (augmented reality, AR) device, a virtual reality (virtual reality, VR) device, a vehicle-mounted device, and an intelligent vehicle. A specific form of the electronic device is not specially limited in embodiments of this application.

An operating system installed on the electronic device includes but is not limited to iOS^{®}, Android^{®}, Harmony^{®}, Windows^{®}, Linux^{®}, or another operating system. A specific type of the electronic device and a type of an operating system when the operating system is installed are not limited in this application.

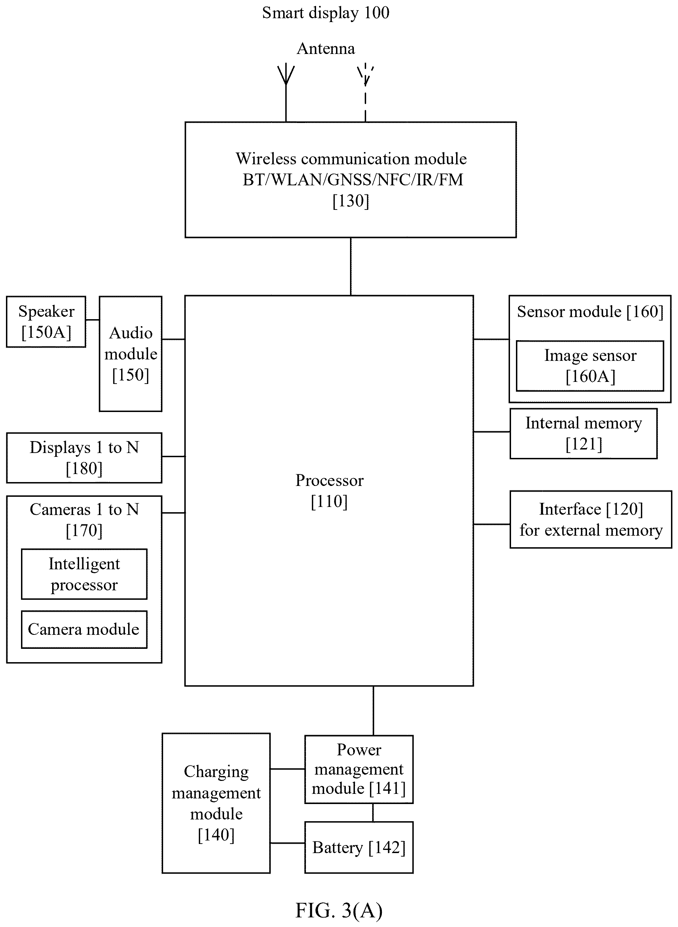

For example, the electronic device is a smart display. FIG. 3(A) is a diagram of a structure of a smart display 100.

The smart display 100 may include a processor 110, an interface 120 for external memory, an internal memory 121, an antenna, a wireless communication module 130, a charging management module 140, a power management module 141, a battery 142, an audio module 150, a speaker 150A, a sensor module 160, a camera 170, and a display 180. The sensor module 160 includes an image sensor 160A.

It may be understood that the structure shown in this embodiment of this application does not constitute a specific limitation on the smart display 100. In some other embodiments of this application, the smart display 100 may include more or fewer components than those shown in the figure, have some components combined, have some components split, or have different component arrangements. The components shown in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a memory, a video codec, a digital signal processor (Digital Signal Processor, DSP), a baseband processor, a neural-network processing unit (Neural-network Processing Unit, NPU), and/or the like. Different processing units may be independent components, or may be integrated into one or more processors.

The controller may be a nerve center and a command center of the smart display 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

A wireless communication function of the smart display 100 may be implemented through the antenna, the wireless communication module 130, the modem processor, the baseband processor, and the like.

The wireless communication module 130 may provide a wireless communication solution that is applied to the smart display 100 and that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, or the like. The wireless communication module 130 may be one or more components integrating at least one communication processor module. The wireless communication module 130 receives an electromagnetic wave through the antenna, performs frequency modulation and filtering processing on an electromagnetic wave signal, and sends a processed signal to the processor 110. The wireless communication module 130 may further receive a to-be-sent signal from the processor 110, perform frequency modulation and amplification on the signal, and convert a processed signal into an electromagnetic wave for radiation through the antenna.

The smart display 100 implements a display function through the GPU, the display 180, the application processor, and the like. The GPU is a microprocessor for image processing, and is connected to the display 180 and the application processor. The GPU is configured to perform mathematical and geometric computation, and graphics rendering. The processor 110 may include one or more GPUs, which execute program instructions to generate or change display information.

The display 180 is configured to display an image, a video image corresponding to the target video, and the like. The display 180 includes a display panel. In some embodiments, the smart display 100 may include 1 or N displays 180, where N is a positive integer greater than 1.

The smart display 100 may implement a photographing function through the ISP, the camera 170, the video codec, the GPU, the display 180, the application processor, and the like.

The ISP is configured to process data fed back by the camera 170. For example, during image shooting, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 170.

The camera 170 is configured to capture a static image or a video. An optical image of an object is generated through the lens and projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV.

In some embodiments, the smart display 100 may include 1 or N cameras 170, where N is a positive integer greater than 1.

Herein, the camera 170 may be disposed in the smart display 100. Certainly, it may alternatively be a component of the electronic device. In some implementations, the camera may alternatively be disposed outside the electronic device, and is connected to the electronic device in a wired or wireless manner. For example, the camera may be connected to the electronic device through Bluetooth or a mobile hotspot. The electronic device may control the camera by sending an instruction to or receiving an instruction from the camera.

The camera 170 may further include a camera module. The camera module may be disposed in the camera. Certainly, it may alternatively be disposed at another position in the smart display 100. The camera module includes a lens, a focus motor, a base, a circuit board, and a photosensitive element.

The base is fastened to a side of the circuit board. The focus motor is located on a side that is of the base and that is away from the circuit board and fastened to a peripheral edge of the base. The lens is mounted in the middle of the focus motor. The photosensitive element is fastened to a side that is of the circuit board and that faces the lens.

The lens is configured to collect an optical signal reflected by a photographed subject. The focus motor is configured to drive the lens to move in a direction parallel to an optical axis. The optical axis is a line passing through a center of the lens. In some embodiments, the smart display 100 may control the focus motor to move the lens to a focus position, to complete a focusing process.

In some embodiments, the focus motor may be a voice coil motor (voice coil motor, VCM), a shape memory alloy (shape memory alloy, SMA) motor, a piezo motor (piezo motor, PM), a stepper motor (stepper motor, STM), or the like.

In some embodiments of this application, the camera 170 may be an artificial intelligence (artificial intelligence, AI) camera. The AI camera may further include an AI processor. In an implementation, the AI processor may be configured to recognize a face and/or a human figure, process an image, process a video, detect a posture, and the like.

The interface 120 for external memory may be configured to connect to an external memory card, for example, a micro SD card, to extend a storage capability of the smart display 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the smart display 100. The internal memory 121 may include a program storage area and a data storage area.

The smart display 100 may implement an audio function such as music playing or recording through the audio module 150, the speaker 150A, the application processor, and the like.

In some other embodiments, the image sensor 160A may be configured to detect an object within a photographing range of the camera. Each photosensitive unit corresponds to one image point in the image sensor. The image sensor 160A may include a first color (red green blue, RGB) image sensor, a second color (red yellow blue, RYB) image sensor, a black-and-white image sensor, an infrared image sensor, and the like. This is not limited in embodiments of this application. The image sensor 160A is configured to collect an image within the photographing range of the camera 170. The image may include an RGB image, an RYB image, a black-and-white image, an infrared image, and the like.

The image sensor 160A may be further disposed in one or more cameras 170. A component arrangement is not specifically limited in embodiments of this application.

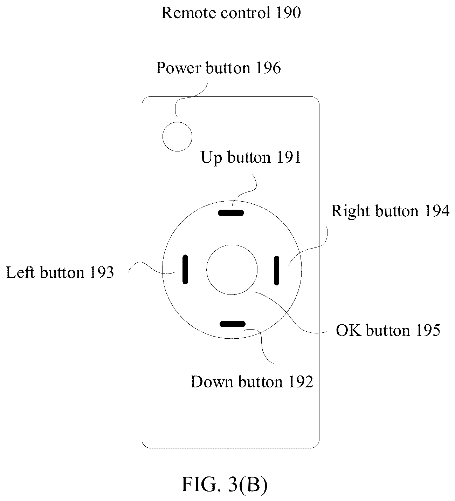

Generally, the smart display 100 may be further provided with a remote control. The remote control is configured to control the smart display 100. FIG. 3(B) is a diagram of a structure of a remote control 190. The remote control 190 may include a plurality of buttons, for example, an up button 191, a down button 192, a left button 193, a right button 194, an OK button 195, and a power button 196. The button on the remote control 190 may be a mechanical button or a touch button. The remote control 190 may receive button input, generate button signal input related to a user setting and function control of the smart display 100, and send a corresponding signal to the smart display 100, to control the smart display 100. For example, when a user presses the up button 191, the down button 192, the left button 193, the right button 194, the OK button 195, or the power button 196, the button may emit a corresponding signal and send the signal to the smart display 100 through Bluetooth, infrared, or the like. The smart display 100 receives the corresponding signal from the button through the wireless communication module 130, and may perform a corresponding operation based on the signal.

It may be understood that the remote control 190 may further include other buttons and components, such as a volume button, a Bluetooth interface, an infrared interface, and a battery accommodation cavity (used for installation of a battery, to supply power to the remote control). Details are not described in this embodiment of this application.

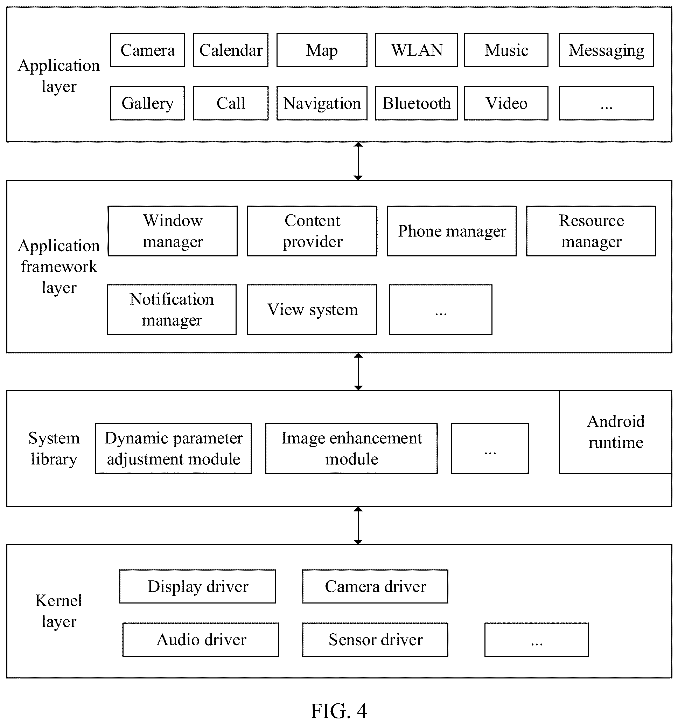

FIG. 4 is a block diagram of a software structure of the smart display 100 according to an embodiment of this application.

In a layered architecture, software is divided into several layers, and each layer has a clear role and task. The layers communicate with each other through a software interface. In some embodiments, an Android^{®} system is divided into four layers from top to bottom: an application layer, an application framework layer, an Android^{®} runtime (Android runtime) and a system library, and a kernel layer.

The application layer may include a series of application packages.

As shown in FIG. 4, the application packages may include applications such as Camera, Gallery, Calendar, Call, Map, Navigation, WLAN, Bluetooth, Music, Video, and Messaging. In some embodiments, a video application can play a video resource.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function of a smartwatch, for example, management of a call status (including answering, rejecting, or the like).

The resource manager provides various resources such as a localized character string, an icon, an image, a layout file, and a video file for an application.

The notification manager enables an application to display notification information in a status bar, and may be configured to convey a notification message. A notification may automatically disappear after a short pause without requiring a user interaction. For example, the notification manager is configured to give a download completion notification, a message notification, and the like. The notification manager may alternatively provide a notification that appears in a top status bar of the system in a form of a graph or scroll bar text, for example, a notification of an application running in the background, or provide a notification that appears on a screen in a form of a dialog window. For example, text information is prompted in the status bar, an alert tone is made, the smartwatch vibrates, or an indicator blinks.

The Android^{®} runtime includes a core library and a virtual machine. The Android^{®} is responsible for scheduling and management of the Android system.

The core library includes two parts: a function that needs to be invoked in a Java language and a core library of Android^{®}.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a dynamic parameter adjustment module and an image enhancement module.

In some embodiments of this application, the dynamic parameter adjustment module is configured to determine target quality parameter information based on the information used to adjust the video quality of the target video. The image enhancement module is configured to perform image processing on the video data based on the target quality parameter information determined by the dynamic parameter adjustment module, to improve video quality corresponding to the video data. The video data includes a plurality of frames of images. The video quality corresponding to the video data may also be understood as image quality corresponding to the video data.

The kernel layer is a layer between hardware and software. The kernel layer includes at least a display driver, a camera driver, an audio driver, and a sensor driver.

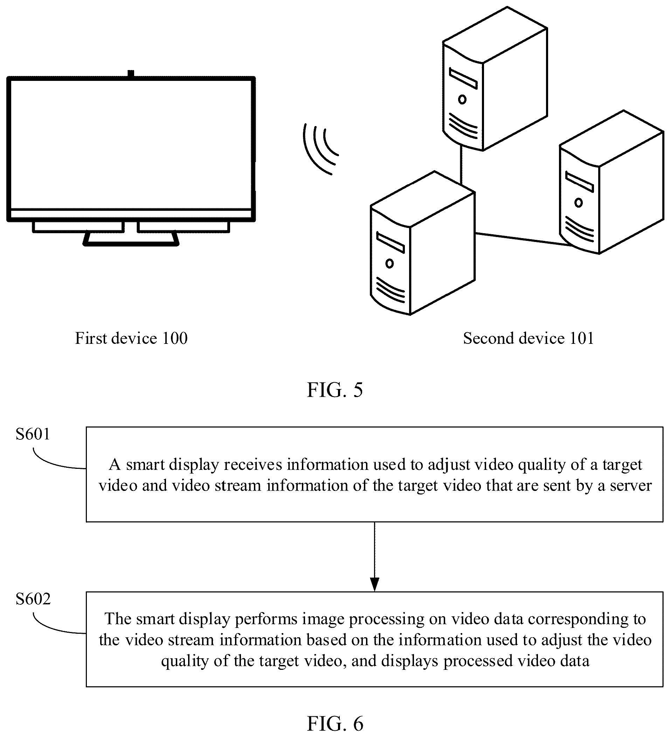

The posture detection method provided in embodiments of this application may be applied to an interaction system. With reference to FIG. 5, an interaction system provided in embodiments of this application includes a first device 100 (for example, a smart display of a user) and a second device 101 (for example, a server).

In some embodiments, a communication connection may be established between the first device 100 and the second device 101. The communication connection may include a wireless connection.

A wireless communication technology for establishing a wireless communication connection includes but is not limited to at least one of a wireless local area network (wireless local area network, WLAN) (for example, a wireless fidelity (wireless fidelity, Wi-Fi) network), Bluetooth (Bluetooth, BT) (for example, conventional Bluetooth or Bluetooth low energy (Bluetooth low energy, BLE)), near field communication (near field communication, NFC), Zigbee (Zigbee), frequency modulation (frequency modulation, FM), infrared (infrared, IR), or the like.

For ease of description, an example in which the first device 100 is a smart display is used for description. Different from a conventional television product, the smart display takes on more roles at home due to its wireless signal receiving and sending functions. The smart display is not only a multimedia entertainment center at home, but also an information sharing center, a control management center, and a multi-device interaction center. The smart display can connect to various devices to exchange information.

In some embodiments of this application, the smart display may obtain the video data corresponding to the target video from the server. The server sends the information used to adjust the video quality of the target video and the video stream information of the target video to the smart display. The smart display may determine target quality parameter information based on the information used to adjust the video quality of the target video, and perform image processing on the video data corresponding to the video stream information based on the target quality parameter information, to improve video quality corresponding to the video data. This improves display effect of the target video in a display process.

The interaction system provided in embodiments of this application may further include another electronic device in addition to the first device 100 and the second device 101. The interaction system provided in embodiments of this application includes but is not limited to interaction between three devices, or may include interaction between one device and a plurality of devices. A person skilled in the art may determine types and a quantity of electronic devices based on an actual requirement, and these designs do not go beyond the protection scope of embodiments of this application.

In the following embodiments, the video processing method provided in embodiments of this application is described with reference to the accompanying drawings by using an example in which a device is a smart display having the structure shown in FIG. 3(A). With reference to FIG. 6, the method may include the following steps.

S601: The smart display receives information used to adjust video quality of a target video and video stream information of the target video that are sent by a server.

In some embodiments of this application, the target video may be any type of video that can be played on the smart display. For example, the target video may include one or more of a movie video, a television series video, a variety show video, a sports video, a game video, a documentary video, a short video, a teaching video, or a live video.

A target application on the smart display can support selection and playing of the target video. The target application may include an application having a video playing function, such as a video application, a game application, a social application, an education application, a conference application, and a player application. The target application may be a system application on the smart display, or may be a third-party application. Certainly, the target application may be an application that has been installed at delivery of the smart display, or may be an application downloaded from a network or obtained from another device by a user in a process of using the smart display.

Generally, the user may select the target video in the target application to watch or learn. For example, the user selects a first movie video in a video application. For another example, the user selects a game tutorial video in a game application. For another example, the user selects, in a social application, a recorded video shared by another user. For another example, the user selects a teaching video in a teaching application. It can be learned that a core scenario in embodiments of this application includes a scenario in which the user selects and watches streaming media (Streaming Media).

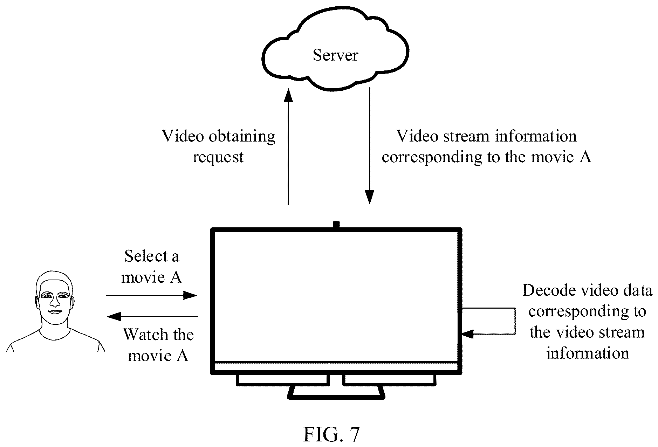

For ease of understanding, an application scenario in embodiments of this application is preliminarily described with reference to FIG. 7.

In some embodiments of this application, the user may select, in a video application on the smart display, a video that the user wants to watch, for example, a movie A. After detecting an operation of selecting the movie A by the user, the smart display sends a video obtaining request to the server. The server receives the video obtaining request, searches for video stream information corresponding to the movie A based on the video obtaining request, and sends the video stream information corresponding to the movie A to the smart display. The smart display receives the video stream information corresponding to the movie A, and decodes video data corresponding to the video stream information. Then, the smart display displays decoded video data corresponding to the movie A. In this way, the user can watch the movie A through the smart display.

It should be noted that in embodiments of this application, that the user may select, in the video application on the smart display, the video that the user wants to watch is merely an example. An application type and a video type are not specifically limited in embodiments of this application.

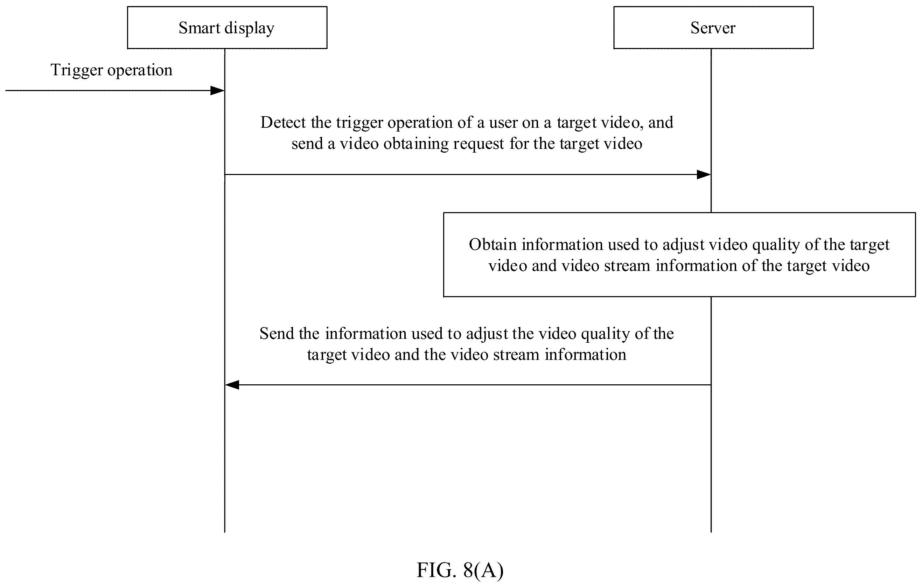

The following specifically describes an interaction process between the smart display and the server in embodiments of this application with reference to FIG. 8(A).

In some embodiments of this application, the smart display may send a video obtaining request for the target video to the server.

In some examples, the smart display may detect a trigger operation of the user on the target video, and send the video obtaining request for the target video to the server.

The server receives the video obtaining request for the target video, obtains the information used to adjust the video quality of the target video and the video stream information of the target video based on the video obtaining request, and sends the information used to adjust the video quality of the target video and the video stream information to the smart display. Information about the video quality of the target video is used to adjust the video quality of the target video displayed on the device. The smart display may receive the information used to adjust the video quality of the target video and the video stream information of the target video that are sent by the server.

In some examples, the video obtaining request may include a video identifier of the target video; or the video stream information of the target video includes a video stream address of the target video. In addition, the video identifier is a designation that can indicate a unique identity of the target video. The video identifier may include a video name, a video ID, and the like.

Specifically, the server may obtain the information used to adjust the video quality of the target video and the video stream address of the target video based on the video identifier of the target video.

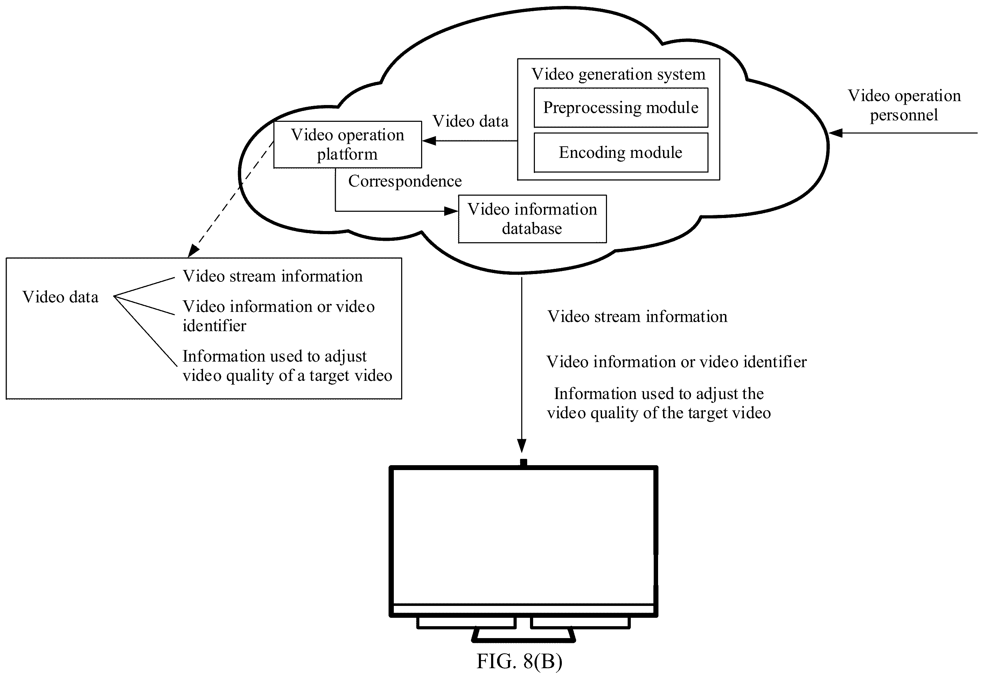

With reference to FIG. 8(B), in some embodiments of this application, the server includes a video generation system and a video operation platform. The video generation system includes a preprocessing module and an encoding module. Video operation personnel may transcode and process source data corresponding to the target video through the video generation system. To be specific, the preprocessing module in the video generation system is configured to perform image processing on the source data corresponding to the target video. The encoding module in the video generation system is configured to encode video data obtained after the image processing, to generate video data.

Specifically, the preprocessing module may perform image processing on the source data corresponding to the target video. Image-processed source data includes the information used to adjust the video quality of the target video. In addition, the preprocessing module may send the image-processed source data to the encoding module. Then, the encoding module may encode the image-processed source data to generate the video data corresponding to the target video.

The information used to adjust the video quality of the target video may include one or more of a definition parameter, a color parameter, a contrast parameter, a brightness parameter, a noise parameter, a smoothness parameter, a grayscale parameter, a saturation parameter, a background blur degree parameter, a vignetting parameter, or a color temperature parameter.

For example, the information used to adjust the video quality of the target video may include a definition parameter of 50, a color parameter of 30, a contrast parameter of 30, a brightness parameter of 40, a noise parameter of 32, a smoothness parameter of 12, a grayscale parameter of 50, a saturation parameter of 43, a background blur degree parameter of 50, a vignetting parameter of 55, and a color temperature parameter of 68.

It should be noted that in embodiments of this application, the foregoing information used to adjust the video quality of the target video is merely used as an example for description, and types of parameters and each parameter in the information used to adjust the video quality of the target video are not specifically limited.

In some embodiments of this application, video data of different target videos may include different information used to adjust the video quality of the target video. Video data of different types of target videos may also include different information used to adjust the video quality of the target video.

For example, slightly darker and less saturated visual effect needs to be created for a movie video, whereas clearer and more vibrant visual effect needs to be produced for a sports video. Therefore, the movie video may have a lower grayscale parameter and saturation parameter and a higher background blur degree parameter than the sports video. The sports video may have a higher definition parameter, color parameter, and brightness parameter than the movie video.

In some embodiments of this application, with continued reference to FIG. 8(B), the encoding module may send the video data of the target video to the video operation platform. The video operation personnel may configure information for the video data through the video operation platform.

For example, the video operation platform may bind the video data to the video stream information, the video identifier, and the information used to adjust the video quality of the target video, that is, establish a correspondence between the video data and the video stream information of the target video, the video identifier, and the information used to adjust the video quality of the target video, so that the video data is associated with the corresponding video stream information, video identifier, and information used to adjust the video quality of the target video.

For another example, the video operation platform may alternatively establish a correspondence between the video data and the video stream information of the target video, video information, and the information used to adjust the video quality of the target video. The video information includes the video identifier and a video type corresponding to the target video.

In addition, the server may further include a video information database. After establishing the correspondence, the video operation platform may store the correspondence in the video information database of the server.

In some embodiments, the preprocessing module may further send the video data, the information used to adjust the video quality of the target video, and the video information or video identifier to the encoding module. After encoding the source data to generate the video data, the encoding module sends the video data, the information used to adjust the video quality of the target video, and the video information or video identifier to the video operation platform.

In this way, after receiving the video obtaining request that is for the target video and that is sent by the smart display, the server may obtain the information used to adjust the video quality of the target video and the video stream information of the target video based on the video identifier and the correspondence, and send the information used to adjust the video quality of the target video and the video stream information to the smart display.

In some embodiments, after receiving the video obtaining request that is for the target video and that is sent by the smart display, the server may further send the video information or video identifier of the target video to the smart display.

In some embodiments, after receiving the video obtaining request that is for the target video and that is sent by the smart display, the server may further directly send the correspondence to the smart display.

It can be learned that in embodiments of this application, the server can not only perform image processing on the source data of the target video in advance to obtain the information used to adjust the video quality of the target video, but also configure information for the video data obtained after the image processing and send the video stream information of the target video, the information used to adjust the video quality of the target video, and the video information or video identifier to the smart display. In this way, the smart display can subsequently perform image processing on the video data based on the information used to adjust the video quality of the target video, and display processed video data.

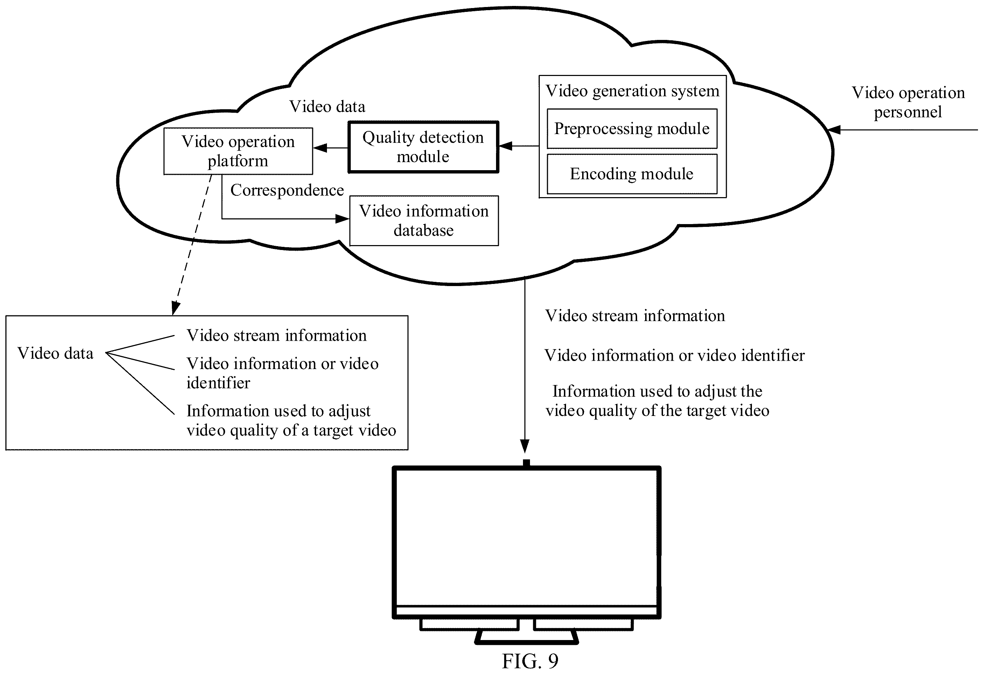

In some embodiments of this application, with reference to FIG. 9, the server includes a video generation system, a quality detection module, and a video operation platform. The video generation system includes a preprocessing module and an encoding module. The preprocessing module in the server may adjust source data corresponding to the target video based on a preset resolution and/or frame rate. Then, the encoding module encodes adjusted source data to obtain video data corresponding to the target video, and sends the video data to the quality detection module. The quality detection module may perform image quality detection on the video data to obtain the information used to adjust the video quality of the target video and corresponding to the target video, and send the information used to adjust the video quality of the target video and the video stream information to the video operation platform.

Similarly, video operation personnel may configure information for the video data through the video operation platform. The video operation platform may establish a correspondence between the video data and the video stream information of the target video, the information used to adjust the video quality of the target video, and the video information or video identifier. After establishing the correspondence, the video operation platform may store the correspondence in a video information database of the server.

In some embodiments, the server may perform image quality detection on the video data corresponding to the target video, to obtain the information used to adjust the video quality of the target video.

Specifically, the preprocessing module may further send the adjusted source data and the video information or video identifier to the encoding module. After encoding the adjusted source data to generate the video data, the encoding module sends the video data and the video information or video identifier to the quality detection module. After performing quality detection on the video data to obtain the information used to adjust the video quality of the target video, the quality detection module sends the information used to adjust the video quality of the target video, the video data, and the video information or video identifier to the video operation platform.

In some embodiments of this application, the quality detection module in the server may include a quality detection algorithm or a quality detection model. The quality detection algorithm or the quality detection model is used to perform image quality detection on the video data to obtain the information used to adjust the video quality of the target video and corresponding to the video data.

The quality detection algorithm may include a noise detection algorithm, a motion image detection algorithm, a video shake detection algorithm, and the like.

The quality detection model may use a convolutional neural network (convolutional neural network, CNN), a region proposal network (region proposal network, RPN), regions with CNN features (regions with cnn features, R-CNN), a fast R-CNN network, a residual network, or the like, or a combination of a plurality of networks to extract the information about the video quality of the target video.

It should be noted that the quality detection model provided in embodiments of this application may include one or more of a YOLO algorithm, an SSD algorithm, and a DenseBox algorithm. These algorithms have advantages of a fast speed and high accuracy. Certainly, the quality detection model is further trained in embodiments of this application. During training of the quality detection model, large amounts of video data and image quality parameters may be used as training samples for training, so that the quality detection model can learn a capability to identify the information used to adjust the video quality of the target video and corresponding to the video data. Specific forms of the quality detection algorithm and the quality detection model are not limited in embodiments of this application.

It can be learned that the server provided in embodiments of this application may simply adjust a resolution or frame rate of the source data of the target video to generate the video data corresponding to the target video. In addition, the quality detection module is added to the server, so that the information used to adjust the video quality of the target video and corresponding to the video data can be obtained. Similarly, the smart display can subsequently obtain video quality corresponding to the video data based on the information used to adjust the video quality of the target video, perform image processing on the video data, and display processed video data.

S602: The smart display performs image processing on video data corresponding to the video stream information based on the information used to adjust the video quality of the target video, and displays processed video data.

In some embodiments of this application, the smart display may determine target quality parameter information based on the information used to adjust the video quality of the target video. The target quality parameter information matches a display capability of the smart display. At least one parameter in the target quality parameter information is different from a parameter in the information used to adjust the video quality of the target video. The display capability of the smart display includes at least one of a display hardware capability and a display software capability of the smart display. The smart display may further perform image processing on the video data corresponding to the video stream information based on the target quality parameter information, and display processed video data.

Specifically, after receiving the video stream information of the video data, the information used to adjust the video quality of the target video, and the video information or video identifier that are sent by the server, the smart display may determine the target quality parameter information based on the information used to adjust the video quality of the target video.

In some examples, the target quality parameter information is determined based on the information used to adjust the video quality of the target video, configuration information, and the video information or video identifier. The configuration information includes information used to adjust the video quality of the target video and corresponding to at least one video identifier or piece of video information, and target quality parameter information corresponding to the information used to adjust the video quality of the target video.

In other words, the smart display provided in embodiments of this application may prestore the configuration information. The configuration information includes information used to adjust the video quality of the target video and corresponding to one or more video identifiers or pieces of video information, and target quality parameter information corresponding to the information used to adjust the video quality of the target video. The smart display may interact with the server in advance, associate the information used to adjust the video quality of the target video on the server with the target quality parameter information, and establish a correspondence between them, to obtain the configuration information.

In some embodiments, the configuration information may be implemented in a form of a configuration table. Alternatively, the configuration information may be implemented through a preset rule or a preset algorithm. Certainly, an implementation of a data structure corresponding to the configuration information is not specifically limited in embodiments of this application.

In some embodiments of this application, at least one parameter in the target quality parameter information is different from that in the information used to adjust the video quality of the target video. In other words, all parameters in the target quality parameter information may be different from all parameters in the information used to adjust the video quality of the target video, or a part of the parameters in the target quality parameter information may be different from a part of the parameters in the information used to adjust the video quality of the target video. In this way, in a subsequent process of performing image processing based on the target quality parameter information, the smart display can perform image processing based on one or more parameters in adjusted video parameters.

In some embodiments of this application, the target quality parameter information may be dynamically configured based on the information used to adjust the video quality of the target video. The smart display may configure, based on its display capability, different target quality parameter information corresponding to different information used to adjust the video quality of the target video.

For example, each video may correspond to one piece of information used to adjust the video quality of the target video, and each piece of information used to adjust the video quality of the target video also corresponds to one piece of target quality parameter information.

In some embodiments of this application, different information used to adjust the video quality of the target video may alternatively be different information corresponding to different videos. The smart display may configure, based on its display capability and a video type, target quality parameter information corresponding to each piece of information used to adjust the video quality of the target video.

For example, information used to adjust the video quality of the target video and corresponding to a first video is a first quality parameter, and information used to adjust the video quality of the target video and corresponding to a second video is a second quality parameter. The configuration table in the smart display may include a correspondence between the first quality parameter and a third quality parameter, and may further include a correspondence between the second quality parameter and a fourth quality parameter. In this case, when receiving the first quality parameter corresponding to the first video, the smart display may determine the third quality parameter based on the first video, the first quality parameter, and the configuration table. When receiving the second quality parameter corresponding to the second video, the smart display may determine the fourth quality parameter based on the second video, the second quality parameter, and the configuration table.

For another example, different information used to adjust the video quality of the target video may alternatively be different information corresponding to different types of videos. In a scenario in which videos of a same type correspond to same information used to adjust the video quality of the target video, each type of video may correspond to one piece of information used to adjust the video quality of the target video. The smart display may configure, based on its display capability and a video type, target quality parameter information corresponding to each piece of information used to adjust the video quality of the target video.

For example, both a movie A and a movie B are movie videos. Information used to adjust the video quality of the target video and corresponding to the movie A and the movie B is a first quality parameter. The configuration table in the smart display may include a correspondence between the first quality parameter and a second quality parameter. In this case, when receiving the first quality parameter corresponding to the movie A or the movie B, the smart display may determine the second quality parameter based on the movie A or the movie B, the first quality parameter, and the configuration table.

In a scenario in which videos of a same type correspond to different information used to adjust the video quality of the target video, each type of video may correspond to a plurality of pieces of information used to adjust the video quality of the target video. The smart display may also configure, based on its display capability and a video type, target quality parameter information corresponding to each piece of information used to adjust the video quality of the target video.

For example, both a movie A and a movie B are movie videos. Information used to adjust the video quality of the target video and corresponding to the movie A is a third quality parameter, and information used to adjust the video quality of the target video and corresponding to the movie B is a fourth quality parameter. The configuration table in the smart display may include a correspondence between the third quality parameter and a fifth quality parameter, and may further include a correspondence between the fourth quality parameter and a sixth quality parameter. In this case, when receiving the third quality parameter corresponding to the movie A, the smart display may determine the fifth quality parameter based on the movie A, the third quality parameter, and the configuration table. When receiving the fourth quality parameter corresponding to the movie B, the smart display may determine the sixth quality parameter based on the movie B, the fourth quality parameter, and the configuration table.

In some embodiments of this application, different smart displays may further configure, based on their display capabilities, corresponding different target quality parameter information for same information used to adjust the video quality of the target video.

Display hardware capabilities of the smart displays are used as an example. A display corresponding to a smart display A is a 2K (2K resolution) display, that is, a resolution is 2560 x 1440. A display corresponding to a smart display B is a 4K display, that is, a resolution is 3840 x 2160. It can be learned that a display hardware capability corresponding to the smart display A is lower than a display hardware capability corresponding to the smart display B. In this way, because the display hardware capabilities of the smart display A and the smart display B are different, in a process in which the smart display A and the smart display B display same video data, the smart display B needs to improve video quality corresponding to the video data to a greater degree, so that the video quality of the video data matches the display hardware capability of the smart display B. For example, one or more parameters in target quality parameter information that is set by the smart display B are higher than one or more parameters in target quality parameter information that is set by the smart display A.

It should be noted that video quality corresponding to a video can directly reflect user experience. The target quality parameter information may be configured through subjective evaluation. The subjective evaluation means evaluating image quality based on subjective perception of a viewer. Certainly, the target quality parameter information may alternatively be configured through objective evaluation. The objective evaluation means calculating a quantized value of image quality corresponding to the video data.

A specific implementation of the target quality parameter information and a specific implementation of configuring the correspondence between the information used to adjust the video quality of the target video and the target quality parameter information are not limited in embodiments of this application.

In some embodiments of this application, the information used to adjust the video quality of the target video may include target quality parameter information. In other words, the server may further determine the target quality parameter information based on the information used to adjust the video quality of the target video.

Specifically, the server may perform image quality detection on the video data corresponding to the target video, to obtain the information used to adjust the video quality of the target video, and determine the target quality parameter information based on the information used to adjust the video quality of the target video. Certainly, the target quality parameter information matches a display capability of an electronic device. The server may directly send the target quality parameter information and the video stream information of the target video to the electronic device.

In this way, in a process of performing image processing on the video data corresponding to the video stream information based on the information used to adjust the video quality of the target video and displaying the processed video data, the smart display may directly perform image processing on the video data corresponding to the video stream information based on the target quality parameter information, and display processed video data.

It can be learned that the smart display may determine the target quality parameter information based on the information used to adjust the video quality of the target video and sent by the server. The target quality parameter information matches the display capability of the smart display. It may be understood that the information used to adjust the video quality of the target video can represent video quality of the target video on the server. In other words, the smart display may determine, within its display capability range based on the information used to adjust the video quality of the target video, a degree to which the video quality corresponding to the video data needs to be optimized, that is, determine the target quality parameter information.

In this way, the smart display can perform image processing on the video data for display by using the target quality parameter information with consideration of the video quality of the target video and the display capability of the smart display. This avoids wasting the display capability of the smart display and prevents excessive image processing on the video data.

In addition, in embodiments of this application, the server may predetermine the target quality parameter information based on the information used to adjust the video quality of the target video. Certainly, the target quality parameter information matches the display capability of the smart display. In this way, the smart display can directly use the target quality parameter information to perform image processing on the video data, and display processed video data. This can not only reduce workload of the smart display, but also improve display effect corresponding to the target video in a process of displaying the video data, to improve user experience.

In some embodiments of this application, the smart display may obtain the video data corresponding to the video stream information, perform image processing on the video data corresponding to the video stream information based on the target quality parameter information, and display processed video data.

In some embodiments, information about the video quality of the target video includes original quality parameter information, and the target quality parameter information includes one or more specific parameters, namely, specific values. In this case, the smart display may directly adjust an original quality parameter of the video data corresponding to the video stream information to be consistent with the target quality parameter information based on the target quality parameter information.

For example, the target quality parameter information includes a definition parameter of 50, a color parameter of 30, a contrast parameter of 30, and a brightness parameter of 40. After the smart display performs image processing on the video data, video data obtained after the image processing has a definition parameter of 50, a color parameter of 30, a contrast parameter of 30, and a brightness parameter of 40.

In some embodiments, the target quality parameter information may alternatively include an adjustment value corresponding to at least one parameter in the information used to adjust the video quality of the target video, that is, the target quality parameter information may represent a degree to which one or more parameters need to be adjusted. In this case, the smart display may alternatively perform image processing on the video data corresponding to the video stream information based on the adjustment value corresponding to the at least one parameter, and display processed video data.

For another example, the information used to adjust the video quality of the target video includes a definition parameter of 10, a color parameter of 20, a contrast parameter of 30, and a brightness parameter of 40. The target quality parameter information includes a definition parameter of 5, a color parameter of 6, a contrast parameter of 7, and a brightness parameter of 10. After the smart display performs image processing on the video data, video data obtained after the image processing has a definition parameter of 15, a color parameter of 26, a contrast parameter of 37, and a brightness parameter of 40.

In some embodiments of this application, the smart display may invoke a target application programming interface to perform image processing on the video data based on the target quality parameter information.

In other words, in the method provided in embodiments of this application, the target application programming interface may be invoked to perform image processing on the video data. It should be understood that the target application programming interface may be an interface provided by a framework layer or an application framework layer, and may provide a function of performing image processing on the video data based on the target quality parameter information. In addition, different applications may correspond to different target application programming interfaces, to perform image processing on the video data.

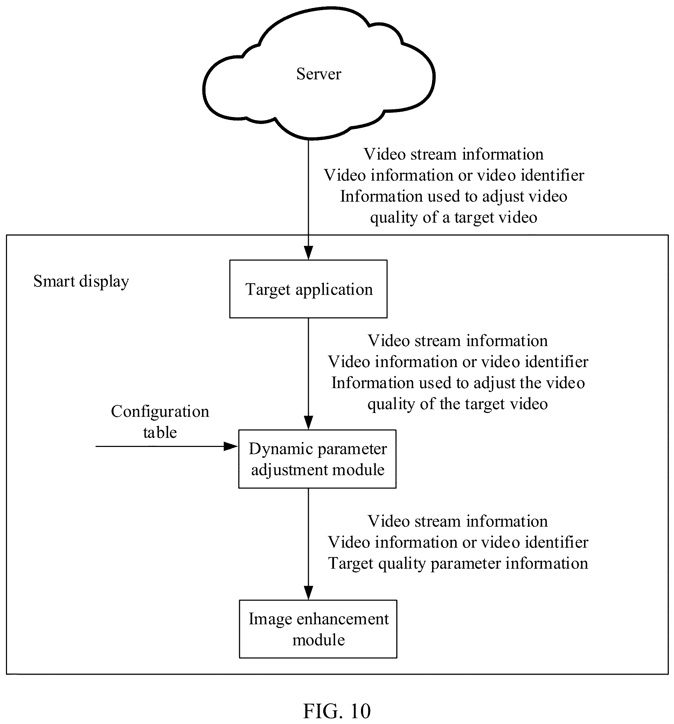

In some embodiments of this application, with reference to FIG. 10, the smart display may include a target application, a dynamic parameter adjustment module, and an image enhancement module. After receiving the video stream information of the target video, the information used to adjust the video quality of the target video, and the video information or video identifier that are sent by the server, the target application on the smart display sends the video stream information, the information used to adjust the video quality of the target video, and the video information or video identifier to the dynamic parameter adjustment module. The dynamic parameter adjustment module obtains the target quality parameter information based on the video information or video identifier, the information used to adjust the video quality of the target video, and the configuration table. In addition, the dynamic parameter adjustment module may invoke the target application programming interface to send the video stream information, the target quality parameter information, and the video information or video identifier to the image enhancement module. The image enhancement module may obtain the video data corresponding to the video stream information, and perform image processing on the video data corresponding to the video stream information based on the target quality parameter information.

In some embodiments of this application, the image enhancement module may further configure different application programming interfaces for different target applications, so that the different target applications can adjust, based on their requirements, image processing intensities corresponding to the video data.

For example, both a first application and a second application are video applications. The image enhancement module may configure a first interface for the first application and a second interface for the second application. When the first application wants to perform image enhancement on the video data by using a first processing intensity, it may invoke the image enhancement module through the first interface. Similarly, when the second application wants to perform image enhancement on the video data by using a second processing intensity, it may invoke the image enhancement module through the second interface. In this way, different applications can flexibly configure image processing intensities, to improve use flexibility.

In some embodiments of this application, a part or all of the parameters in the target quality parameter information may be different from parameters in the information used to adjust the video quality of the target video. In this case, the smart display may perform image processing on the video data based on a part or all of the parameters in the information about the video quality of the target video, and display processed video data. In other words, the smart display may separately adjust parameters corresponding to the video data. In this way, the video data can be processed more finely, to improve processing flexibility during image processing.

In some embodiments of this application, the target video may include a plurality of frames of images. The information used to adjust the video quality of the target video includes information used to adjust image quality of at least one frame of image in the target video.

The server may further send the video stream information and the information used to adjust the image quality of the at least one frame of image in the target video to the smart display. The smart display may perform image processing on the at least one frame of image in the video data corresponding to the video stream information based on the information used to adjust the image quality of the at least one frame of image in the target video, and display processed video data.

The information used to adjust the image quality of the at least one frame of image in the target video may include one or more of a definition parameter, a color parameter, a contrast parameter, a brightness parameter, a noise parameter, a smoothness parameter, a grayscale parameter, a saturation parameter, a background blur degree parameter, a vignetting parameter, or a color temperature parameter.

In other words, the smart display may receive the information used to adjust the image quality of the at least one frame of image in the target video and sent by the server, and perform image processing on the at least one frame of image in the video data based on information about the image quality of the at least one frame of image in the target video, and display the processed video data. In this way, the smart display can perform image processing on the at least one frame of image in the video data for display with consideration of the image quality corresponding to the at least one frame of image. The at least one frame of image in the video data can be processed finely, to improve flexibility and fineness during processing.

In some embodiments of this application, after performing image processing on the video data based on the target quality parameter information, the smart display may display a video image corresponding to the target video. The video image is formed through rendering based on the video data obtained after the image processing.

In other words, after performing image processing on the video data based on the target quality parameter information, the image enhancement module may control the display to display the video data obtained after the image processing. In this way, the user can view the target video with good display effect through the smart display.

In some embodiments of this application, the smart display may further output prompt information. The prompt information is used to prompt that the video quality of the target video has been improved.

For example, after the user selects the movie A on a details page corresponding to the target application, the smart display detects an operation of selecting the movie A by the user, performs image processing on video data corresponding to the movie A, and displays a video image corresponding to the movie A after the image processing. In a process of displaying the video image corresponding to the movie A, the smart display may further output prompt information.

The prompt information may include one or more of pop-up prompt information, text prompt information, voice prompt information, or video prompt information.

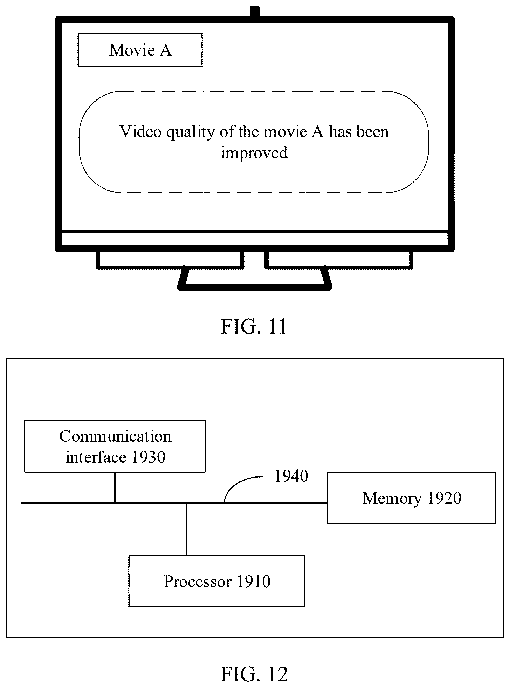

With reference to FIG. 11, the smart display may display the prompt information on a current playing interface of the movie A. The prompt information may be implemented as text "Video quality of the movie A has been improved". Certainly, the smart display may further control a speaker to play the prompt information. The prompt information may be implemented as an alert tone, for example, "Video quality of the movie A has been improved".

It can be learned that after performing image processing on the video data, the smart display may output the prompt information to prompt the user that the video quality of the target video has been improved. This improves interactivity between the user and the smart display and flexibility of a video display process.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed.

A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

An embodiment of this application further provides an electronic device, which may be, for example, the foregoing smart display. As shown in FIG. 12, the electronic device may include one or more processors 1910, a memory 1920, and a communication interface 1930.

The memory 1920, the communication interface 1930, and the processor 1910 are coupled. For example, the memory 1920, the communication interface 1930, and the processor 1910 may be coupled together through a bus 1940.

The communication interface 1930 is configured to transmit data to another device. The memory 1920 stores computer program code. The computer program code includes computer instructions. When the computer instructions are executed by the processor 1910, the electronic device is enabled to perform the video processing method in embodiments of this application.

The processor 1910 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content of this disclosure. Alternatively, the processor may be a combination of processors implementing a computing function, for example, a combination of one or more microprocessors, or a combination of a DSP and a microprocessor.

The bus 1940 may be a peripheral component interconnect (Peripheral Component Interconnect, PCI) bus, an extended industry standard architecture (Extended Industry Standard Architecture, EISA) bus, or the like. The bus 1940 may be classified as an address bus, a data bus, a control bus, or the like. For ease of representation, only one bold line is used for representation in FIG. 12, but this does not mean that there is only one bus or only one type of bus.

An embodiment of this application provides an interaction system. The interaction system includes an electronic device and a server. The electronic device is configured to send a video obtaining request for a target video to the server. The server is configured to receive the video obtaining request sent by the electronic device, and obtain information used to adjust video quality of the target video and video stream information of the target video. The server is further configured to send the information used to adjust the video quality of the target video and the video stream information of the target video to the electronic device. The electronic device is further configured to receive the information used to adjust the video quality of the target video and the video stream information of the target video that are sent by the server, and obtain video data corresponding to the video stream information based on the video stream information of the target video. The electronic device is further configured to perform image processing on the video data corresponding to the video stream information based on the information used to adjust the video quality of the target video, and display processed video data.

An embodiment of this application provides a server. The server includes a memory and a processor. The memory stores program instructions. The processor runs the program instructions to perform related method steps in the foregoing method embodiments.

An embodiment of this application further provides an electronic device. The electronic device includes a memory, a processor, and a display. The memory, the display, and the processor are coupled. The display is configured to output a video image. The memory is configured to store computer-readable instructions. When the processor reads the computer-readable instructions from the memory, the electronic device performs related method steps in the foregoing method embodiments.

An embodiment of this application further provides a computer-readable storage medium. The computer-readable storage medium stores computer program code. When the processor executes the computer program code, the electronic device performs related method steps in the foregoing method embodiments.

An embodiment of this application further provides a computer program product. When the computer program product is run on a computer, the computer is enabled to perform related method steps in the foregoing method embodiments.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

The electronic device, the computer storage medium, or the computer program product provided in this application is configured to perform the corresponding method provided above. Therefore, for beneficial effects that can be achieved by the electronic device, the computer storage medium, or the computer program product, refer to the beneficial effects in the corresponding method provided above. Details are not described herein again.

The foregoing descriptions about implementations allow a person skilled in the art to clearly understand that, for the purpose of convenient and brief description, division into the foregoing functional modules is merely used as an example for illustration. During actual application, the foregoing functions may be allocated to different functional modules and implemented based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, the division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes instructions for instructing a device (which may be a single-chip microcomputer, a chip, or the like) or a processor (processor) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video processing method, applied to an electronic device, wherein the method comprises:
sending a video obtaining request for a target video to a server;
receiving, from the server, information used to adjust video quality of the target video and video stream information of the target video;
obtaining video data corresponding to the video stream information based on the video stream information of the target video; and
performing image processing on the video data corresponding to the video stream information based on the information used to adjust the video quality of the target video and displaying processed video data.

2. The method according to claim 1, wherein performing image processing on the video data corresponding to the video stream information based on the information used to adjust the video quality of the target video and displaying the processed video data comprises:
determining target quality parameter information based on the information used to adjust the video quality of the target video, wherein the target quality parameter information matches a display capability of the electronic device, and at least one parameter in the target quality parameter information is different from a parameter in the information used to adjust the video quality of the target video; and
performing image processing on the video data corresponding to the video stream information based on the target quality parameter information and displaying processed video data.

3. The method according to claim 1, wherein the information used to adjust the video quality of the target video comprises target quality parameter information, and the target quality parameter information matches a display capability of the electronic device; and performing image processing on the video data corresponding to the video stream information based on the information used to adjust the video quality of the target video and displaying the processed video data comprises:
performing image processing on the video data corresponding to the video stream information based on the target quality parameter information and displaying processed video data.

4. The method according to claim 2 or 3, wherein information about the video quality of the target video comprises original quality parameter information; and performing image processing on the video data corresponding to the video stream information based on the target quality parameter information and displaying the processed video data comprises:
adjusting an original quality parameter of the video data corresponding to the video stream to be consistent with the target quality parameter information based on the target quality parameter information and displaying processed video data.

5. The method according to claim 2 or 3, wherein the target quality parameter information comprises an adjustment value corresponding to at least one parameter in the information used to adjust the video quality of the target video; and performing image processing on the video data corresponding to the video stream information based on the target quality parameter information and displaying the processed video data comprises:
performing image processing on the video data corresponding to the video stream information based on the adjustment value corresponding to the at least one parameter and displaying processed video data.

6. The method according to any one of claims 1 to 5, wherein the information used to adjust the video quality of the target video comprises information used to adjust image quality of at least one frame of image in the target video; and performing image processing on the video data corresponding to the video stream information based on the information used to adjust the video quality of the target video and displaying the processed video data comprises:
performing image processing on the at least one frame of image in the video data corresponding to the video stream information based on the information used to adjust the image quality of the at least one frame of image in the target video and displaying processed video data.

7. The method according to any one of claims 1 to 6, wherein the method further comprises:
outputting prompt information, wherein the prompt information is used to prompt that the video quality of the target video has been improved.

8. The method according to any one of claims 1 to 7, wherein the information used to adjust the video quality of the target video comprises one or more of a definition parameter, a color parameter, a contrast parameter, a brightness parameter, a noise parameter, a smoothness parameter, a grayscale parameter, a saturation parameter, a background blur degree parameter, a vignetting parameter, or a color temperature parameter.

9. The method according to any one of claims 1 to 8, wherein
the video obtaining request comprises a video identifier of the target video; or
the video stream information of the target video comprises a video stream address of the target video.

10. The method according to any one of claims 2 to 5, wherein
the display capability of the electronic device comprises at least one of a display hardware capability and a display software capability of the electronic device.

11. A video processing method, applied to a server, wherein the method comprises:
receiving a video obtaining request that is for a target video and that is sent by an electronic device;
obtaining information used to adjust video quality of the target video and video stream information of the target video based on the video obtaining request; and
sending the information used to adjust the video quality of the target video and the video stream information of the target video to the electronic device, wherein information about the video quality of the target video is used to adjust the video quality of the target video displayed on a device.

12. The method according to claim 11, wherein before receiving the video obtaining request that is for the target video and that is sent by the electronic device, the method further comprises:
performing image quality detection on video data corresponding to the target video, to obtain the information used to adjust the video quality of the target video.

13. The method according to claim 11, wherein before receiving the video obtaining request that is for the target video and that is sent by the electronic device, the method further comprises:
performing image quality detection on video data corresponding to the target video, to obtain the information used to adjust the video quality of the target video; and
determining target quality parameter information based on the information used to adjust the video quality of the target video, wherein the target quality parameter information matches a display capability of the electronic device; wherein
sending the information used to adjust the video quality of the target video and the video stream information of the target video to the electronic device comprises:
sending the target quality parameter information and the video stream information of the target video to the electronic device.

14. The method according to any one of claims 11 to 13, wherein the video obtaining request comprises a video identifier of the target video; or the video stream information of the target video comprises a video stream address of the target video; and
obtaining the information used to adjust the video quality of the target video and the video stream information of the target video based on the video obtaining request comprises:
obtaining the information used to adjust the video quality of the target video and the video stream address of the target video based on the video identifier of the target video.

15. An interaction system, wherein the interaction system comprises an electronic device and a server;
the electronic device is configured to send a video obtaining request for a target video to the server;
the server is configured to receive the video obtaining request sent by the electronic device, and obtain information used to adjust video quality of the target video and video stream information of the target video;
the server is further configured to send the information used to adjust the video quality of the target video and the video stream information of the target video to the electronic device;
the electronic device is further configured to receive the information used to adjust the video quality of the target video and the video stream information of the target video that are sent by the server, and obtain video data corresponding to the video stream information based on the video stream information of the target video; and
the electronic device is further configured to perform image processing on the video data corresponding to the video stream information based on the information used to adjust the video quality of the target video, and display processed video data.

16. A server, wherein the server comprises a memory and a processor, the memory stores program instructions, and the processor runs the program instructions to perform the video processing method according to any one of claims 11 to 14.

17. An electronic device, wherein the electronic device comprises a memory, a processor, and a display, the memory, the display, and the processor are coupled, the display is configured to display a video image corresponding to a target video, the memory is configured to store computer-readable instructions, and when the processor reads the computer-readable instructions from the memory, the electronic device is enabled to perform the video processing method according to any one of claims 1 to 10.

18. A computer-readable storage medium, wherein the computer-readable storage medium comprises a computer program, and when the computer program is run on an electronic device, the electronic device is enabled to perform the video processing method according to any one of claims 1 to 10.
